# FASCICULE DE BREVET EUROPEEN

(11) **EP 1 306 558 B1**
(45) Date de publication et mention de la délivrance du brevet: **13.12.2006**
(21) Numéro de dépôt: 02292594.5
(22) Date de dépôt: 21.10.2002
(51) Int. Cl.: F04D 29/36, F03D 7/02, F01D 15/10, B64C 11/30

(54) **Dispositif électrohydraulique de changement de pas d'hélice**
Elektrohydraulisches Gerät zur Steigungswinkelverstellung eines Flügels
Electric-hydraulic device for changing the pitch of a fan

(30) Priorité: 24.10.2001 FR 0113715
(43) Date de publication de la demande: 02.05.2003
(73) Titulaire: SNECMA, 75015 Paris (FR)
(72) Inventeur: Franchet, Michel, 77240 Pouilly-le-Fort (FR); Kettler, Daniel, 77590 Chartrettes (FR); Ruis, Jean-Pierre, 77820 Le Chatelet en Brie (FR)
(74) Mandataire: David, Alain

(56) Documents cités:
- EP-A- 0 154 808
- EP-A- 1 081 390
- WO-A-92/08896
- FR-A- 890 641
- FR-A- 2 712 250
- GB-A- 2 016 598
- US-A- 5 897 293

## Description

### Domaine de l'invention

La présente invention se rapporte à un dispositif de commande de changement de pas d'hélice utilisant un actionneur électrohydraulique. Elle trouve application à tout système muni d'une hélice, éolienne ou ventilateur industriel par exemple, comme aux turbopropulseurs et turboréacteurs munis d'une soufflante comprenant une pluralité d'aubes ou de pales à angle de calage variable.

### Art antérieur

Il est connu, pour augmenter les performances et améliorer le rendement du moteur d'une turbomachine durant toutes les phases de son fonctionnement, du décollage à l'atterrissage, de recourir à la variation du pas d'hélice ou de soufflante. Ce calage variable permet en outre de faire varier le régime de l'hélice ou de la soufflante pour obtenir la poussée désirée, sans modifier celui de la turbine qui est en général calé à son régime maximum continu, voire, lors de l'atterrissage, d'inverser cette poussée remplaçant ainsi les systèmes conventionnels lourds et complexes d'inversion de poussée.

Les dispositifs actuels de commande de variation de pas d'hélice comporte généralement des actionneurs hydrauliques (vérin entraînant chaque pied d'aube) qui procurent la force nécessaire pour placer l'hélice dans la position désirée. Ces dispositifs sont toutefois particulièrement complexes, encombrants et présentent en outre des problèmes importants de fiabilité dus notamment à l'utilisation de joints ou de raccords tournants. En effet, il est important d'éviter toute fuite du fluide hydraulique vers la turbine source de dégradation des performances, voire même d'incendie et de limiter tout risque de pollution (contamination des prélèvements d'air). Le brevet US 5,897,293 illustre parfaitement ce type de dispositif hydraulique comportant de très nombreuses tuyauteries, des valves hydrauliques et des joints tournants qu'il est nécessaire de faire cheminer ou de loger au travers du corps et de l'arbre d'entraînement de la turbomachine.

La commande de pas d'hélice peut aussi être réalisée par un système électrique d'entraînement à base de moteurs à aimants permanents ou asynchrones associés à des systèmes vis-écrou (voir par exemple EP 0 154 808) ou à des pignons solidaires de chaque aube (FR 89 0641 et FR 2 712 250 par exemple). Toutefois, de tels systèmes impliquent le recours à des moteurs volumineux pour assurer les fortes puissances nécessaires aux déplacements rapides du pas de l'hélice sans trop démultiplier le mécanisme de calage.

### Objet et définition de l'invention

La présente invention propose de pallier les inconvénients de ces dispositifs de l'art antérieur avec un dispositif de commande de pas d'hélice qui soit simple, peu encombrant et particulièrement fiable. Un but de l'invention est notamment de proposer un dispositif de commande qui élimine tout risque de fuites hydrauliques.

Ces buts sont atteints par un dispositif de commande électrohydraulique de variation du pas des pales d'un rotor d'une machine, les pales étant montées sur un fût entraîné en rotation par un arbre d'entraînement de la machine et ayant chacune un pied pouvant pivoter autour d'un axe longitudinal de la pale, l'arbre d'entraînement étant lui même entraîné en rotation par rapport à une structure fixe de la machine, caractérisé en ce qu'il comporte d'une part un vérin hydraulique dont un piston est solidaire d'un anneau de commande et de synchronisation dans lequel sont engagés des manetons décentrés fixés sous chacun desdits pieds des pales et dont un corps cylindrique est fermé par un couvercle intégrant une pompe hydraulique haute pression (de préférence à pistons) alimentant en fluide hydraulique les deux faces dudit piston au travers de canaux intégrés dans ledit corps cylindrique du vérin et d'autre part un moteur électrique commandé et alimenté en courant par une génératrice de courant comportant un inducteur solidaire de ladite structure fixe du turbopropulseur et un induit solidaire dudit arbre d'entraînement de la turbomachine.

Cette structure conduit à un dispositif de commande très simplifié, particulièrement compact et facile à mettre en oeuvre. Les risques de fuites sont fortement limitées du fait de l'absence de tuyauteries et de raccords tournants.

La génératrice de courant peut être constituée par un transformateur tournant ou bien par un système à collecteur à bagues lisses et balais. Elle est actionnée par un circuit électronique de commande relié d'une part à un dispositif d'alimentation en énergie de la machine et d'autre part à un calculateur de la machine, et agencé pour moduler l'alimentation en courant dudit moteur électrique fournie par ledit dispositif d'alimentation en énergie, de façon à agir sur le temps et/ou le régime de fonctionnement et le sens de rotation de ladite pompe hydraulique haute pression pour obtenir un déplacement déterminé du piston correspondant à un calage désiré des pales du rotor.

De préférence, le vérin hydraulique comporte un capteur linéaire de type LVDT formé d'un tube cylindrique solidaire du corps cylindrique du vérin et d'un noyau plongeur solidaire d'une tige du piston et pouvant se déplacer linéairement dans le tube.

L'invention trouve application aussi bien au niveau d'une soufflante d'un turboréacteur que d'une hélice d'un turbopropulseur, d'une éolienne ou d'un ventilateur industriel. Avantageusement, dans le domaine aéronautique, le calculateur est le calculateur pleine autorité (FADEC) du turbopropulseur ou du turboréacteur.

### Brève description des dessins

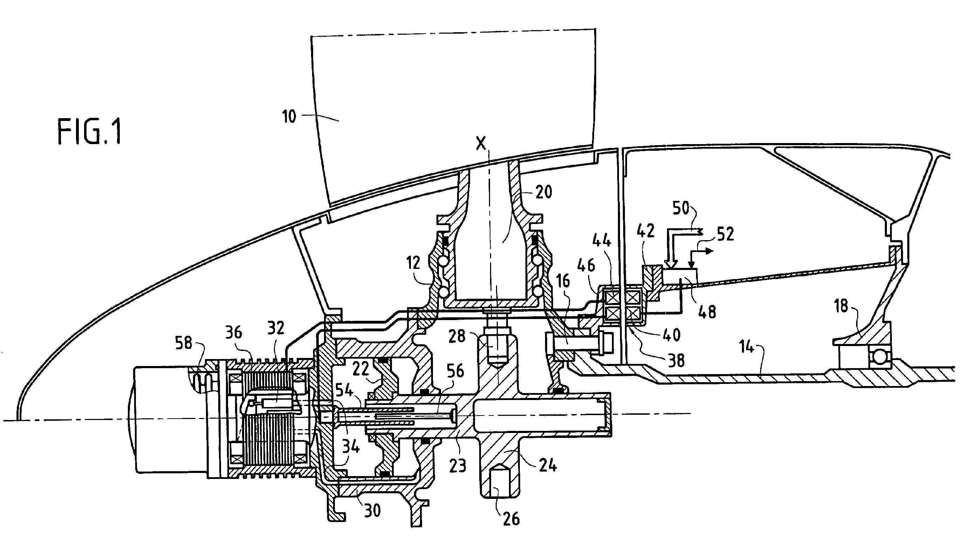

Les caractéristiques et avantages de la présente invention ressortiront mieux de la description suivante, faite à titre indicatif et non limitatif, en regard de la figure unique représentant une coupe partielle axiale de l'avant d'un turbopropulseur comportant un dispositif de commande de pas d'hélice selon l'invention.

### Description détaillée d'un mode de réalisation préférentiel

Dans l'exemple illustré, le turbopropulseur comporte une hélice comprenant une pluralité de pales 10 montées sur un fût 12 entraîné en rotation par l'arbre principal d'entraînement 14 du turbopropulseur (via des premiers moyens de fixation 16), cet arbre d'entraînement étant lui même entraîné en rotation par rapport à une structure fixe 18 du turbopropulseur par un générateur de gaz au travers d'un réducteur de vitesse (l'un et l'autre non représentés). Chaque pale comporte un pied ou pivot 20 mobile en rotation autour de son axe longitudinal X.

Selon l'invention, le dispositif de commande du pas d'hélice comporte un vérin hydraulique dont le piston 22 est solidaire par sa tige 23 d'un anneau de commande et de synchronisation 24 dans des alésages axiaux 26 duquel sont engagés des manetons décentrés 28 fixés sous chacun des pieds des pales et dont le corps cylindrique 30 est fermé par un couvercle intégrant une pompe hydraulique haute pression 32 du type à pistons axiaux ou radiaux.

La pompe alimente en fluide hydraulique les deux faces du piston 22 au travers de canaux 34 intégrés dans le corps cylindrique 30 du vérin. Elle est entraînée par un moteur électrique 36, de préférence du type asynchrone ou à aimants permanents, pour éliminer le frottement et l'usure (donc aussi la maintenance), commandé et alimenté en courant par l'intermédiaire d'une génératrice de courant 38 dont un inducteur 40 est fixé sur une première pièce support 42 solidaire de la structure fixe 18 du turbopropulseur et un induit 44 est fixé sur une seconde pièce support 46 disposée en regard de la précédente et solidaire de l'arbre d'entraînement 14 du turbopropulseur.

Un circuit électronique de commande 48, relié d'une part par une liaison de puissance 50 au dispositif d'alimentation en énergie électrique du turbopropulseur (non représenté) qui va délivrer la puissance électrique nécessaire à la commande en courant du moteur électrique et d'autre part par une liaison électrique 52 au calculateur numérique pleine autorité (ou FADEC - Full Authority Digital Electronic Computer) du turbopropulseur (non représenté) qui va délivrer les informations de commande (angle de rotation de la pale) nécessaires à la variation du pas d'hélice, permet une modulation de l'alimentation en courant du moteur électrique selon les conditions vol de l'aéronef et en fonction d'informations fournies par des capteurs de couple et de régime (non représentés) situés sur l'arbre d'entraînement 14 du turbopropulseur, de façon à agir sur le temps et/ou le régime de fonctionnement et le sens de rotation de la pompe hydraulique 32 et obtenir le déplacement du piston 22 du vérin nécessaire pour assurer le calage des pales d'hélice désiré (donc la poussée désirée). Un contrôle de l'angle de rotation de la pale est de préférence assuré par un capteur linéaire de type LVDT (Linear Variable Differential Transformer) monté à l'intérieur du vérin et formé d'un tube cylindrique 54 solidaire du corps du vérin 30 et d'un noyau plongeur 56 solidaire de la tige du piston 23 et pouvant se déplacer linéairement dans ce tube. Un exemple d'un tel capteur est donné dans la demande de brevet européen EP1 081 390. Au déplacement du noyau dans le tube correspond un signal de sortie électrique délivré au calculateur par le capteur LVDT et représentatif de la position de la tige du vérin, elle même proportionnelle à l'angle de rotation de la pale. De préférence, le capteur de déplacement est du type redondant à deux signaux de sortie indépendants.

Les moyens d'alimentation en courant peuvent être constitués par un système classique avec un collecteur à bagues lisses (faisant fonction d'induit) monté sur la seconde pièce support 46 et solidaire de l'arbre d'entraînement 14 et des balais (faisant fonction d'inducteur) montés sur la première pièce support 42 et solidaires de la structure fixe 18. Ces moyens peuvent aussi de préférence être réalisés par un transformateur tournant comportant une bobine inductrice montée sur la première pièce support 42 et solidaire de la structure fixe 18 et une bobine induite montée sur la seconde pièce support 46 et solidaire de l'arbre d'entraînement 14, formant ainsi une génératrice de courant.

Le fonctionnement du dispositif de commande selon l'invention est schématiquement le suivant.

Le dispositif de commande est actionné lorsque, durant une phase de vol de l'aéronef, le pilote souhaite notamment modifier la poussée de son appareil. Pour ce faire, le FADEC va adresser au circuit électronique de commande un ordre qui va générer un courant d'excitation dans l'inducteur de la génératrice qui va créer un champ électrique dans l'induit situé en regard et entraîné en rotation par l'arbre d'entraînement de l'hélice. Ce champ électrique transformé en courant dans l'induit de la génératrice va alors alimenter directement le moteur électrique. Le courant d'excitation est plus ou moins modulé pour faire varier le champ magnétique et donc le régime du moteur électrique, lequel va agir à son tour sur le régime de la pompe hydraulique. De façon à pouvoir entraîner le moteur électrique dans un sens ou dans l'autre, l'inducteur comme l'induit de la génératrice de courant sont de préférence constitués chacun de deux paires de bobines concentriques excitées séparément pour chaque sens de rotation.

Le fluide hydraulique présent dans la pompe 32 et qui est alternativement aspiré sur une face du piston 22 et refoulé sur l'autre face circule quant à lui en circuit fermé dans l'ensemble pompe-vérin, les variations de volume du fluide dues à sa compressibilité ou sa dilatation étant compensées classiquement par un accumulateur 58 intégré à cette pompe hydraulique haute pression. A un régime de rotation élevé du moteur électrique correspond une vitesse de déplacement élevée du piston, le temps de fonctionnement assurant la longueur du déplacement, donc la valeur du calage.

On notera que, pour gagner encore en masse et en encombrement, l'ensemble formé par la pompe hydraulique et le moteur électrique peut être avantageusement remplacé par une électropompe à pistons intégrée, le barillet de pompe servant alors de rotor (de préférence à aimants permanents ou asynchrone). En outre, tous les composants de l'électropompe et de l'accumulateur sont disposés dans l'axe du vérin de façon à obtenir une parfaite symétrie axiale, ce qui permet un entraînement sans balourd ou à tout le moins facile à équilibrer.

Cette simplification du cheminement des commandes associée à la compacité du dispositif de commande selon l'invention, en libérant de l'espace dans le corps de la turbomachine, offre en outre l'opportunité de reconsidérer totalement la structure du moteur (carter, réducteur, arbre d'hélice par exemple) et donc de procurer des gains en masse et en coût supplémentaires.

Avec l'invention, l'accès à la pompe hydraulique et au moteur électrique d'entraînement (ou à l'électropompe intégrée) est facile et rapide, du fait de sa construction modulaire, ce qui facilite la maintenance (contrôle ou dépose) tout en en réduisant son coût. De plus, si l'alimentation par transformateur tournant s'avère relativement plus complexe, elle présente l'avantage de s'effectuer sans frottement et donc sans usure au contraire d'une alimentation par collecteurs et balais, de structure plus simple, et qui présente également l'intérêt d'être plus légère en terme de masse. On notera toutefois, à l'avantage de cette seconde solution, que la vitesse de rotation des hélices, par exemple dans un gros turbopropulseur, est relativement faible (entre 1000 à 1500tr/mn) et donc l'usure en principe réduite. Notons encore que, par sécurité, on peut aussi doubler le nombre de balais.

## Revendications

1. Dispositif de commande électrohydraulique de variation du pas des pales d'un rotor d'une machine, les pales (10) étant montées sur un fût (12) entraîné en rotation par un arbre d'entraînement de la machine (14) et ayant chacune un pied (20) pouvant pivoter autour d'un axe longitudinal de la pale, l'arbre d'entraînement étant lui même entraîné en rotation par rapport à une structure fixe de la machine (18), **caractérisé en ce qu**'il comporte d'une part un vérin hydraulique dont un piston (22) est solidaire d'un anneau de commande et de synchronisation (24) dans lequel sont engagés des manetons décentrés (28) fixés sous chacun desdits pieds des pales et dont un corps cylindrique (30) est fermé par un couvercle intégrant une pompe hydraulique haute pression (32) alimentant en fluide hydraulique les deux faces dudit piston au travers de canaux (34) intégrés dans ledit corps cylindrique du vérin et d'autre part un moteur électrique (36) commandé et alimenté en courant par une génératrice de courant (38a, 38b) comportant un inducteur (40) solidaire de ladite structure fixe de la machine et un induit (44) solidaire dudit arbre d'entraînement de la machine.

2. Dispositif selon la revendication 1, **caractérisé en ce que** ladite génératrice de courant est actionnée par un circuit électronique de commande (48) relié d'une part à un dispositif d'alimentation en énergie de la machine et d'autre part à un calculateur de la machine.

3. Dispositif selon la revendication 2, **caractérisé en ce que** ledit circuit électronique est agencé pour moduler l'alimentation en courant dudit moteur électrique fournie par ledit dispositif d'alimentation en énergie, de façon à agir sur le temps et/ou le régime de fonctionnement et le sens de rotation de ladite pompe hydraulique haute pression pour obtenir un déplacement déterminé du piston correspondant à un calage désiré des pales du rotor.

4. Dispositif selon la revendication 3, **caractérisé en ce que** ladite pompe hydraulique à haute pression est du type à pistons axiaux ou radiaux.

5. Dispositif selon la revendication 1, **caractérisé en ce que** ladite génératrice de courant est constituée par un transformateur tournant.

6. Dispositif selon la revendication 1, **caractérisé en ce que** ladite génératrice de courant est constituée par un système à collecteur à bagues lisses et balais.

7. Dispositif selon la revendication 1, **caractérisé en ce que** ledit vérin hydraulique comporte un capteur linéaire de type LVDT formé d'un tube cylindrique (54) solidaire dudit corps cylindrique du vérin et d'un noyau plongeur (56) solidaire d'une tige (23) du piston et pouvant se déplacer linéairement dans ledit tube.

8. Dispositif selon la revendication 1, **caractérisé en ce que** ledit rotor est une hélice d'un turbopropulseur.

9. Dispositif selon la revendication 1, **caractérisé en ce que** ledit rotor est une soufflante d'un turboréacteur.

10. Dispositif selon la revendication 8 ou la revendication 9, **caractérisé en ce que** ledit calculateur est le calculateur pleine autorité (FADEC) du turbopropulseur ou du turboréacteur.

11. Dispositif selon la revendication 1, **caractérisé en ce que** ledit rotor est une hélice d'une éolienne.

12. Dispositif selon la revendication 1, **caractérisé en ce que** ledit rotor est une hélice d'un ventilateur industriel.

## Claims

1. An electrohydraulic device for varying the pitch of the blades of a machine rotor, the blades (10) being mounted on a hub (12) rotated by a drive shaft (14) of the machine, and each blade having a root (20) capable of pivoting about a longitudinal axis of the blade, the drive shaft itself being rotated relative to a stationary structure (18) of the machine, the device being **characterised in that** it comprises firstly a hydraulic actuator whose piston (22) is secured to a control and synchronization ring (24) in which off-centre wrist pins (28) are engaged, each fixed beneath one of said blade roots, and having a cylinder (30) closed by a cover that includes a high pressure hydraulic pump (32) feeding hydraulic fluid to both faces of said piston via channels (34) integrated in said cylinder of the actuator, and secondly an electric motor (36) controlled and powered by an electricity generator (38a, 38b) comprising an inductor (40) secured to said stationary structure of the machine and an armature (44) secured to said drive shaft of the machine.

2. A device according to claim 1, **characterised in that** said current generator is actuated by an electronic control circuit (48) connected firstly to an electrical power supply of the machine and secondly to a computer of the machine.

3. A device according to claim 2, **characterised in that** said electronic circuit is arranged to modulate the supply of current to said electric motor as taken from said power supply device in such a manner as to act on the operating speed and/or time and on the direction of rotation of said high pressure hydraulic pump so as to obtain a determined displacement of the piston corresponding to a desired setting for the rotor blades.

4. A device according to claim 3, **characterised in that** said high pressure hydraulic pump is of the axial or radial piston type.

5. A device according to claim 1, **characterised in that** said current generator is constituted by a rotary transformer.

6. A device according to claim 1, **characterised in that** said current generator is constituted by a smooth slip ring collector and brush system.

7. A device according to claim 1, **characterised in that** said hydraulic actuator includes an LVDT type linear sensor constituted by a cylindrical tube (54) secured to said actuator cylinder and by a plunger core (56) secured to a rod (23) of the piston and capable of moving linearly in said tube.

8. A device according to claim 1, **characterised in that** said rotor is a turboprop propeller.

9. A device according to claim 1, **characterised in that** said rotor is a turbojet fan.

10. A device according to claim 8 or claim 9, **characterised in that** said computer is the full authority digital engine computer (FADEC) of the turboprop or the turbojet.

11. A device according to claim 1, **characterised in that** said rotor is the propeller of a wind generator.

12. A device according to claim 1, **characterised in that** said rotor is an industrial fan propeller.

## Patentansprüche

1. Vorrichtung zur elektrohydraulische Steuerung der Einstellung der Steigung der Blätter eines Rotors einer Maschine, wobei die Blätter (10) auf einem Schaft (12) angebracht sind, der durch eine Antriebswelle der Maschine (14) in Rotation versetzt wird, und wobei jedes Blatt einen Fuß (20) hat, der um eine Längsachse des Blattes schwenken kann, wobei die Antriebswelle selbst bezüglich einer festen Struktur der Maschine (18) in Rotation versetzt werden kann, **dadurch gekennzeichnet, daß** sie einerseits einen Hydraulikzylinder, dessen Kolben (22) fest mit einem Ring zur Steuerung und Synchronisierung (24) verbunden ist, in welchen dezentrierte Zapfen (28) eingreifen, die unter jedem der Füße der Blätter befestigt sind, und dessen Zylinderkörper (30) durch einen Deckel verschlossen ist, der eine Hochdruckhydraulikpumpe (32) integriert, die die beiden Seiten des Kolbens durch Kanäle (34) mit Hydraulikfluid versorgt, die in den Zylinderkörper des Zylinders integriert sind, und andererseits einen Elektromotor (36) umfaßt, der gesteuert und mit Strom versorgt wird durch einen Stromgenerator (38a, 38b), der einen Erreger (40), der fest mit der festen Struktur der Maschine verbunden ist, und einen Anker (44) umfaßt, der fest mit der Antriebswelle der Maschine verbunden ist.

2. Vorrichtung nach Anspruch 1, **dadurch gekennzeichnet, daß** der Stromgenerator durch einen elektronischen Steuerkreis (48) betätigt wird, der einerseits mit einer Energieversorgungsvorrichtung der Maschine und andererseits mit einem Rechner der Maschine verbunden ist.

3. Vorrichtung nach Anspruch 2, **dadurch gekennzeichnet, daß** der elektronische Schaltkreis eingerichtet ist, um die Versorgung des Elektromotors mit Strom, der durch die Energieversorgungsvorrichtung geliefert wird, derart zu modulieren, daß auf die Zeit und/oder die Drehzahl des Betriebs und die Drehrichtung der Hochdruckhydraulikpumpe eingewirkt wird, um eine vorbestimmte Bewegung des Kolbens entsprechend einem für Blätter des Rotors gewünschten Neigungswinkel zu erhalten.

4. Vorrichtung nach Anspruch 3, **dadurch gekennzeichnet, daß** die Hochdruckhydraulikpumpe vom Typ mit axialen oder radialen Kolben ist.

5. Vorrichtung nach Anspruch 1, **dadurch gekennzeichnet, daß** der Stromgenerator mit einem Drehtransformator gebildet ist.

6. Vorrichtung nach Anspruch 1, **dadurch gekennzeichnet, daß** der Stromgenerator mit einem Abnehmersystem mit glatten Ringen und Bürsten gebildet ist.

7. Vorrichtung nach Anspruch 1, **dadurch gekennzeichnet, daß** der Hydraulikzylinder einen linearen Sensor vom LVDT-Typ, der mit einem Zylinderrohr (54), das fest mit dem Zylinderkörper des Zylinders verbunden ist, und einem Magnetanker (56) ausgebildet ist , der fest mit einer Stange (23) des Kolbens verbunden ist und sich linear in dem Rohr bewegen kann.

8. Vorrichtung nach Anspruch 1, **dadurch gekennzeichnet, daß** der Rotor ein Propeller eines Turbotriebswerks ist.

9. Vorrichtung nach Anspruch 1, **dadurch gekennzeichnet, daß** der Rotor ein Gebläse einer Strahlturbine ist.

10. Vorrichtung nach Anspruch 8 oder Anspruch 9, **dadurch gekennzeichnet, daß** der Rechner ein Rechner mit voller Kontrolle (FADEC) des Turbotriebwerks oder der Strahlturbine ist.

11. Vorrichtung nach Anspruch 1, **dadurch gekennzeichnet, daß** der Rotor ein Propeller einer Windkraftmaschine ist.

12. Vorrichtung nach Anspruch 1, **dadurch gekennzeichnet, daß** der Rotor ein Propeller eines Industrielüfters ist.
